(19)

Europäisches Patentamt

European Patent Office

Office européen des brevets

(11) **EP 4 179 861 A1**

(12) **EUROPEAN PATENT APPLICATION**

(43) Date of publication:
**17.05.2023 Bulletin 2023/20**

(21) Application number: **21208031.1**

(22) Date of filing: **12.11.2021**

(51) International Patent Classification (IPC):
***A01C 21/00*** (2006.01)

(52) Cooperative Patent Classification (CPC):
**A01C 21/007**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **YARA International ASA
0277 Oslo (NO)**

(72) Inventors:
• **Ramirez Builes, Victor Hugo
48249 Dülmen (DE)**

• **Küsters, Jürgen
48249 Dülmen (DE)**
• **Sanin Abisambra, Jose
10961 Berlin (DE)**
• **Laier, Cedric
10961 Berlin (DE)**
• **Valencia Sandoval, Carlos Andres
10961 Berlin (DE)**
• **Aksari, Melis Bilgic
10961 Berlin (DE)**

(74) Representative: **AWA Sweden AB
P.O. Box 11394
404 28 Göteborg (SE)**

(54) **METHOD AND DEVICE FOR A FERTILIZER RECOMMENDATION FOR COFFEE**

(57) The present invention relates to a computer-implemented method for determining a fertilizer recommendation specific to coffee plants, wherein the method comprises a vegetative and a productive demand and different adjustment factors. A device for the implementation of the method is envisaged, by means of which the determination of the different factors is enabled and improved.

Fig. 1

EP 4 179 861 A1

# Description

## Technical field

The present disclosure relates to the field of agriculture and aims at providing a specific fertilizer recommendation for coffee plantations.

## Background

The approaches described in this section are approaches that could be pursued, but not necessarily approaches that have been previously conceived or pursued. Therefore, unless otherwise indicated, it should not be assumed that any of the approaches described in this section qualify as prior art merely by virtue of their inclusion in this section.

Determining the appropriate amount of fertilizer a crop needs is one of the most important decisions a farmer will encounter. A deficit in nitrogen will reduce yield, while an excess will produce economic losses and damage the environment. A deficit and/or unbalance of other nutrients will lead to yield losses, crop defects and reduced crop quality. This is of greater importance with higher value crops, like coffee. The genus *Coffea* comprises more than 120 perennial species. The two most popular are *Coffea arabica* (known as "Arabica") and *canephora* (known as "Robusta") and are cultivated in over 70 countries, mainly in the equatorial regions of Central and South America, Africa and South-East Asia and their seeds, called coffee beans, are used to flavor beverages and products across the globe. Coffee is one of the world's most valuable commodity crops, but the majority of coffee plantations are smallholders with little access to modern agriculture technologies to improve their yield.

Usually, coffee production may take place in agroforestry systems, wherein other plants and trees are intercropped with the coffee plants to provide shade and other advantages in general such as increasing local biodiversity, erosion reduction, improvement of water storage in soils and the like, all these improving the farmers income. Depending on the species, coffee may be cultivated in regions located at altitudes ranging from sea level to 2000 m. While temperatures below 7°C and above 33°C reduce production and bean size and brew quality, optimal mean temperatures are comprised between 15-25° C and their fertilizer needs should be conveniently adjusted for these and other factors.

Known approaches for the determination of a fertilizer recommendation are based on detailed chemical analysis from soil and plant tissues and specific measurements of the coffee plants yield and size. An example of such an approach can be found in BR102019002078 A2, wherein the method includes different steps comprising the harvest of the fruit and the subsequent processing for a chemical analysis.

## SUMMARY OF THE INVENTION

The present disclosure aims at providing a quick and accurate fertilizer recommendation for coffee cultivation which does not require the lengthy process steps required by a chemical analysis of the plant and which takes into consideration several different factors for the plant growth and the nutrients absorption like average air temperature and shade conditions.

According to a first aspect of the present disclosure, this and other objectives are achieved by means of a computer-implemented method for determining a fertilizer recommendation for coffee plants, wherein the method comprises the steps of determining an agricultural field wherein at least one coffee plantation is comprised, receiving plant density data of the at least one coffee plantation, receiving plant species data and crop growth stage data of the at least one coffee plantation, wherein the crop growth stage data defines a vegetative crop stage or a productive crop stage; wherein the method further comprises determining a basic demand and the basic demand is based on a vegetative demand if the crop is in a vegetative stage and the basic demand is based on the sum of a vegetative and a productive demand if the plantation is on a productive stage, wherein the vegetative demand is based on the plant density data and a nutrient specific vegetative demand factor based on the plant species data.

Following this approach, a specific fertilizer recommendation based on the different growth stages of a plant is achieved.

According to a further embodiment, determining the productive demand comprises receiving yield data and determining a productive demand based on the yield data and a nutrient specific productive demand factor based on the plant species data.

Following this approach, the fertilizer recommendation is adapted to the yield and plant species of the agricultural field.

According to a further embodiment, the method further comprises adjusting the vegetative demand by a temperature coefficient, wherein determining the temperature coefficient comprises receiving altitude data and/or an average air temperature of the agricultural field and the temperature coefficient is determined based on the average air temperature and/or the altitude.

Following this approach, the fertilizer recommendation is adapted to the temperature.

According to a further embodiment, the method further comprises receiving an average air temperature of the agricultural field from weather data and adjusting the average air temperature based on the altitude of the agricultural field.

Following this approach, a more precise determination of the temperature compensation is achieved.

According to a further embodiment, the method further comprises receiving the number of productive stems of the plants present in the plantation, and wherein the vegetative demand is further adjusted based on the number of productive stems.

Following this approach, the specific demands of the plants based on the number of productive stems is achieved.

According to a further embodiment, the basic demand is adjusted by means of a nutrient specific efficiency factor, wherein determining a nutrient specific efficiency factor comprises receiving at least one of a fertilizer product data, or weather data, and soil data of the agricultural field, and the efficiency factor is determined based on the at least one of the fertilizer product data, the weather data, or the soil data.

Following this approach, additional boundary conditions can be taken into consideration.

According to a further embodiment, the method further comprises determining a shadow condition of the agricultural field, and wherein the basic demand is adjusted based on the shadow condition.

Following this approach, the fertilizer recommendation is adapted to the shade conditions of the agricultural field.

According to a further embodiment, the method further comprises determining at least one position for the shadow determination to be carried out.

Following this approach, the shade conditions of the field are more accurately determined.

According to a further embodiment, the method further comprises receiving soil data of the agricultural field, and wherein the total nutrient demand is adjusted based on a soil nutrient availability factor.

Following this approach, the fertilizer recommendation is adapted to the existing nutrients on the field.

According to a further embodiment, a device for determining a fertilizer demand for coffee plants, configured to carry out the method according to any one of the previous embodiments is envisaged to allow the user to carry out the above-mentioned methods.

According to a further embodiment, the device comprises input and output means and a dedicated Graphical User Interface, wherein the shadow condition is determined according to a gradually adjustable image showing different pre-defined shadow condition images based on the user input.

Following this approach, the user can obtain a reliable determination of the shadow condition.

According to a further embodiment, the device may determine at least one position and display the at least one position by means of the display unit for the user to carry out the shadow determination.

According to a further embodiment, the at least one position determined by the device to provide a reliable shadow determination may be determined based on the agricultural field.

According to a further embodiment, the at least one position is further determined based on the relative position and orientation of the agricultural field.

Following these approaches, a more reliable determination of the shadow condition is achieved and the number of positions to be sampled are reduced

According to a further embodiment, the device comprises a localization unit to determine positional data of the device, and the elevation of the agricultural field is determined based on the positional data of the device.

Following this approach, the user is provided with a reliable determination of the altitude of the agricultural field.

According to a further embodiment, the device is further configured to receive weather data and based on the positional data and the elevation determine an average air temperature of the agricultural field.

Following this approach, a reliable temperature adjustment for the fertilizer recommendation is achieved.

According to further embodiments, a data processing apparatus, a computer-readable storage medium and a computer program product configured to carry out the above discussed methods are envisaged within the present disclosure.

## BRIEF DESCRIPTION OF THE FIGURES

The accompanying drawings, which are included to provide a further understanding of the present disclosure and are incorporated in and constitute a part of this specification, illustrate embodiments of the disclosure and together with the description serve to explain the principles of the disclosure.

Figure 1 shows an example of a coffee plantation with some of the considered features of importance for the current disclosure.

Figure 2 describes a device according to one of the main embodiments of the current disclosure.

Figure 3 shows an embodiment of the Graphical User Interface showing an image to determine the shadow factor.

Figure 4 shows another embodiment of the Graphical User Interface, wherein a plurality of positions for determining the shadow factor are shown.

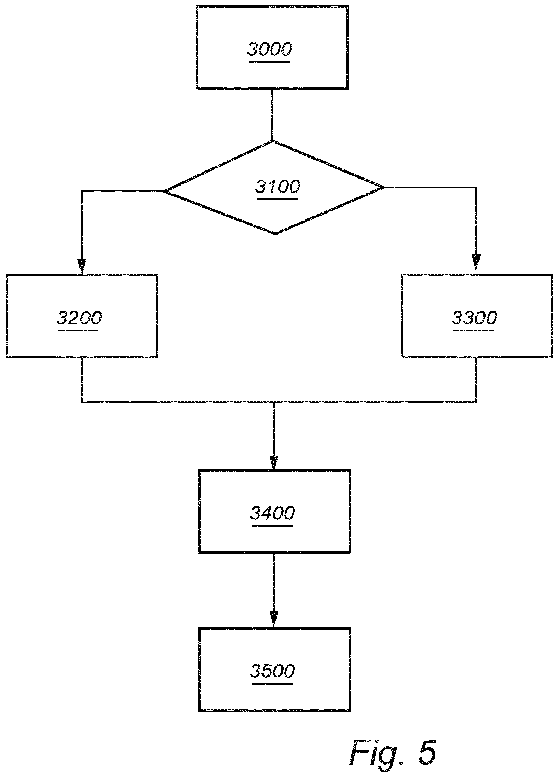

Figure 5 shows a flowchart of a method according to an embodiment of the current disclosure.

The accompanying drawings are used to help easily understand the technical idea of the present disclosure and it should be understood that the idea of the present disclosure is not limited by the accompanying drawings. The idea of the present disclosure should be construed to extend to any alterations, equivalents and substitutes beside the accompanying drawings.

## DETAILED DESCRIPTION

The terms "comprising", "comprises" and "comprised of" as used herein are synonymous with "including", "includes" or "containing", "contains", and are inclusive or open-ended and do not exclude additional, non-recited members, elements or method steps. It will be appreciated that the terms "comprising", "comprises" and "comprised of" as used herein comprise the terms "consisting of", "consists" and "consists of".

The recitation of numerical ranges by endpoints includes all numbers and fractions subsumed within the respective ranges, as well as the recited endpoints.

The term "about" or "approximately" as used herein when referring to a measurable value such as a parameter, an amount, a temporal duration, and the like, is meant to encompass variations of +/-10% or less, specifically +/-5% or less, more specifically +/-1% or less, and still more specifically +/-0.1% or less of and from the specified value, insofar such variations are appropriate to perform in the disclosed application. It is to be understood that the value to which the modifier "about" or "approximately" refers is itself also specifically disclosed.

Whereas the terms "one or more" or "at least one", such as one or more or at least one member(s) of a group of members, is clear per se, by means of further exemplification, the term encompasses inter alia a reference to any one of said members, or to any two or more of said members, such as, e.g., any $\geq 3$, $\geq 4$, $\geq 5$, $\geq 6$ or $\geq 7$ etc. of said members, and up to all said members.

Unless otherwise defined, all terms used in disclosing the application, including technical and scientific terms, have the meaning as commonly understood by one of ordinary skill in the art to which this application belongs. By means of further guidance, term definitions are included to better appreciate the teaching of the present application.

In the following passages, different aspects of the application are defined in more detail. Each aspect so defined may be combined with any other aspect or aspects unless clearly indicated to the contrary. In particular, any feature indicated as being preferred or advantageous may be combined with any other feature or features indicated as being preferred or advantageous.

Reference throughout this specification to "one embodiment" or "an embodiment" means that a particular feature, structure or characteristic described in connection with the embodiment is included in at least one embodiment of the present application. Thus, appearances of the phrases "in one embodiment" or "in an embodiment" in various places throughout this specification are not necessarily all referring to the same embodiment, but may. Furthermore, the particular features, structures or characteristics may be combined in any suitable manner, as would be apparent to a person skilled in the art from this disclosure, in one or more embodiments. Furthermore, while some embodiments described herein include some but not other features included in other embodiments, combinations of features of different embodiments are meant to be within the scope of the application, and form different embodiments, as would be understood by those in the art. For example, in the appended claims, any of the claimed embodiments can be used in any combination.

In the present description of the application, parenthesized or emboldened reference numerals affixed to respective elements merely exemplify the elements by way of example, with which it is not intended to limit the respective elements. It is to be understood that other embodiments may be used and structural or logical changes may be made without departing from the scope of the present application. The following detailed description, therefore, is not to be taken in a limiting sense, and the scope of the present application is defined by the appended claims.

The terminology used herein is for the purpose of describing particular example embodiments only and is not intended to be limiting. As used herein, the singular forms "a", "an" and "the" may be intended to include the plural forms as well, unless the context clearly indicates otherwise.

The use of the expression "at least" or "at least one" suggests the use of one or more elements, as the use may be in one of the embodiments to achieve one or more of the desired objects or results.

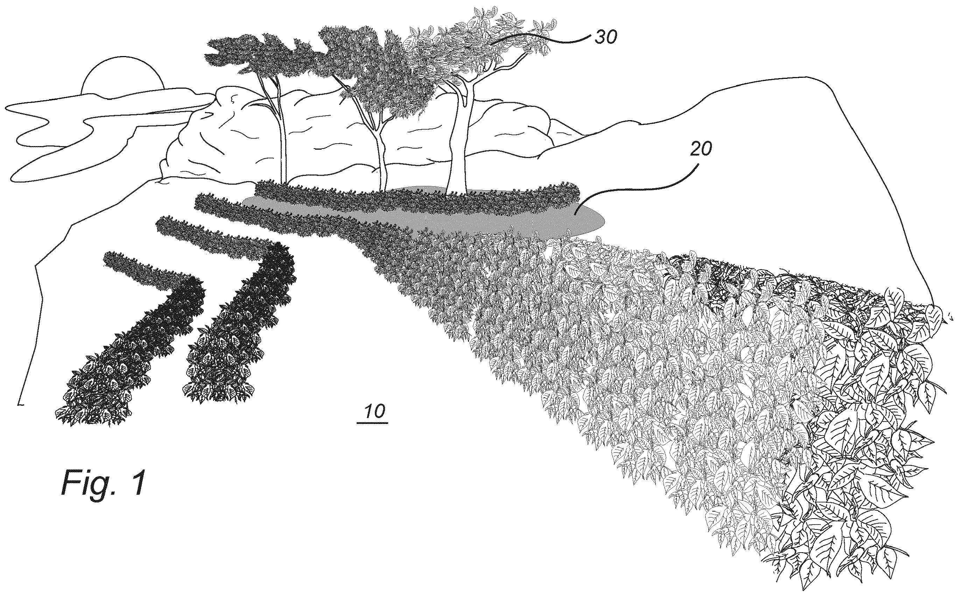

Figure 1 shows a schematic representation of coffee plantations in agroforestry systems, wherein an agricultural field 10 is shown with the usual tree canopy forms 30 creating a resulting shade region 20 for illustration purposes. Usually, farmers would determine their practices based on previous experiences without consideration of external factors. Moreover, usual fertilizer products present a fixed ratio of macro- and micro-nutrients which renders difficult a proper fine tuning according to the optimal dosage of nutrients. The law of the minimum, developed by Justus von Liebig and based upon work by the botanist Carl Sprengel, states that plant growth is related to the most limiting nutrient. Amongst the most important nutrients for agricultural purposes Nitrogen (N), Phosphorus (P), Potassium (K), Magnesium (Mg), Calcium (Ca) and Sulfur (S) are part of the macronutrients needed for plant development. Other elements like Sodium (Na), iron (Fe), Manganese (Mn), Boron (B), Copper (Cu), Molybdenum (Mo), and Zinc (Zn) are considered micronutrients due to their usual lower concentration present in plant tissues. As such, the lack or incorrect dosage of any of the above-mentioned nutrients has a detrimental influence towards the development of crops and their yield production.

Several factors influence the correct recommendation of nutrients for a correct fertilization. For example, soil, water availability, weather and other parameters have a direct influence in the uptake of nutrients. In the case of Coffee, some specific factors related to the coffee plant, and environmental parameters derived from the boundary conditions present in the production system can be considered of special importance. For example, the number of productive stems has been found to have a direct linear relationship for the vegetative fertilizer demand of coffee plants; temperature conditions have a direct relation to the vegetative demand, whereas shade conditions have a direct influence in the total amount of nutrients needed. While the specific nutrient demand might be different with respect to the individual nutrients, thanks to the nutrient specific approach of the current disclosure a balanced and optimized nutrient recommendation can be achieved.

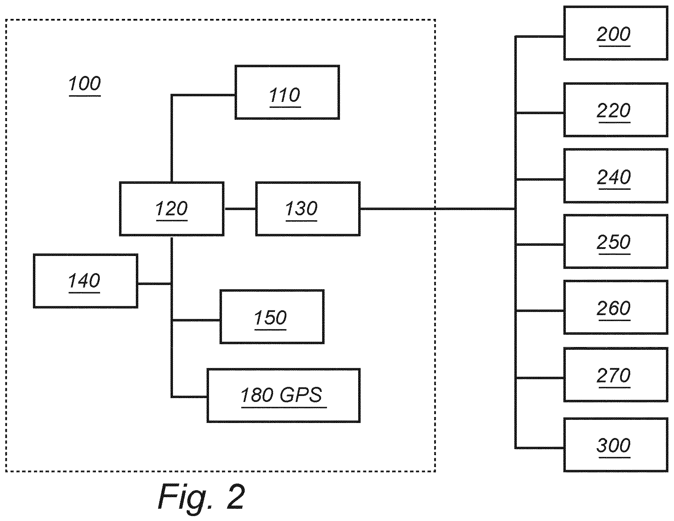

Figure 2 shows an example of a device 100 according to the present disclosure. Device 100 may comprise several components such as a memory unit 110, a processor 120, a wired/wireless communication unit 130, a localization unit 180 (including GPS and orientation means like a compass), and an input/output unit 140 which will be further described below.

The method of the current disclosure comprises receiving data related to the agricultural field where the coffee plantation is located. For the main embodiment of the present disclosure, receiving data of the plantation comprises receiving at least plant density data, plant species, growth stage data and expected or past season's yield data.

Different embodiments are envisaged for the provision of the field and crop data. In an embodiment, the farmers may provide the data by means of a dedicated interface. However, the computer implemented method of the current disclosure may further comprise receiving field and crop data from a remotely situated server or from locally accessible memory units.

Device 100 may comprise an agricultural recommendation engine 220 to which the system may be remotely connected by means of the communication unit 130, may it be of a remote nature. In this case, the agricultural recommendation engine 220 may be represented by a computer, a remotely accessible server, other client-server architectures or any other electronic devices usually encompassed under the term data processing apparatus. Device 100 can be represented as well by a laptop computer or handheld device, with an integrated agricultural recommendation engine 150 which can be fully operated at the farm's location and may comprise a GPS unit or any other suitable localization means 180.

It is to be understood that the presence of remote and integrated recommendation engines are not mutually excluding. Integrated agricultural recommendation engine 150 can be a local copy of remote agricultural recommendation engine 220 or a light version of it to support periods of low network connectivity and offline work. Device 100 and remote or integrated agricultural recommendation engine may comprise field and farm data and external data and/or be configured to receive said data, whereby external data comprises weather data, satellite imagery data and further data provided by weather forecast providers or other third parties. Field data may comprise amongst others current and past data of at least one of the following: field and geographic identifiers regarding the geometry of the boundaries of the agricultural field, including the presence of areas within the agricultural field which are not managed, topographic data, crop identifiers (crop variety and type, crop growth stage, planting data and date, plant nutrition and health status) of current and past crops, harvest data (yield, value, product quality, estimated or recorded historic values), soil data (nutrient availability, soil type, pH, soil organic matter (SOM) and/or cation exchange capacity, CEC). Farm data may comprise further data regarding to planned and past tasks like field maintenance practices and agricultural practices, fertilizer application data, pesticide application data, irrigation data and other field reports as well as historic series of the data, allowing the comparison of the data with past data, and the processing of further administrative data like work shifts, logs and other organizational data. Planned and past tasks may comprise further activities like surveillance of plants and pests, application of pesticides, fungicides or crop nutrition products, measurements of at least one farm or field parameter, maintenance and repair of ground hardware and other similar activities.

The device 100 may be configured to receive and/or retrieve soil data from available online soil databases like SoilGrids from the World Soil Information, SSURGO (Soil Survey Geographic Database from the United States Department of Agriculture) or any similar soil data repository, as well as by means of user input. Soil data may be used directly in the fertilization recommendation if a nutrient content is available in the accessed data repositories, but may be as well used for the adapting the recommendation and/or planning of the fertilizer application based on other soil data (e.g. soil texture and/or moisture may be taken into consideration when determining a variable fertilizer application and/or the optimum number of application and the respective amounts).

Device 100 may be further configured to receive any of the above mentioned data and further field data from a predetermined number of locations within or nearby the analyzed region, inputted manually by the farmers by means of the input/output unit 140 or received by the communication unit 130 from dedicated sensors 270. Further, device 100 and agricultural recommendation engine 150 or 220 may be configured to receive weather data from nearby weather stations 260 and/or external crop/farm sensors or sensing devices 270, as well as by means of the input/output unit 140. Nearby weather stations 260 and/or external crop/farm sensors 270 are configured to communicate via one or more networks. In another embodiment, weather data is provided by external weather forecast companies. Weather data may further include present and past series of data of the at least one of the following: temperatures (e.g. average, minima and maxima), accumulated precipitation, relative humidity, wind speed, solar radiance, accumulated sun hours, as well as forecasts, etc.

Device 100 may further be operatively connected to an agricultural apparatus 300. Examples of agricultural apparatus 300 include tractors, combines, harvesters, planters, trucks, fertilizer equipment, and any other item of physical machinery or hardware, typically mobile machinery, and which may be used in tasks associated with agriculture. In one embodiment, device 100 may be configured to communicate with the agricultural apparatus 300 by means of wireless networks in order to set a variable rate application prescription for the determined crop, or alternatively, to determine the measurement region as indicated destination. Device 100 may be further configured to produce a machine-readable script file for the agricultural apparatus to carry out the fertilizer application.

The method of the current application comprises therefore determining a fertilizer recommendation or demand for coffee plants based on the received data. In a main embodiment, receiving data 3000 may comprise receiving plant species and plant density data of the at least one coffee plantation present in the agricultural field together with a crop growth stage data, wherein the crop growth stage data defines 3100 a vegetative crop stage or a productive crop stage, wherein the method comprises determining a basic demand for the plantation and the basic demand is based on a vegetative demand if the crop is in a vegetative stage 3200 and the basic demand is based on the sum of a vegetative demand and a productive demand if the crop is in a productive growth stage 3300, wherein the vegetative demand is based on the plant density and a nutrient specific vegetative demand factor based on the plant species data. The method of the current application may further comprise an adjustment step 3400 of the fertilizer recommendation and/or determining 3500 the application of the fertilizer recommendation.

In a further embodiment, the method may comprise receiving yield data and determining the productive demand based on the yield data and a nutrient specific productive demand factor.

In a further embodiment, the method may further comprise adjusting the vegetative demand by a temperature coefficient, wherein determining the temperature coefficient comprises receiving altitude data or an average air temperature of the agricultural field and wherein the temperature coefficient is determined based on the average average air temperature or the altitude. With elevation, usual temperatures and air density changes the dynamics of nutrient acquisition and crop development and such an adjustment improves the fertilizer recommendation.

In a further embodiment, the method further comprises receiving an average air temperature of the agricultural field from weather data and adjusting the average air temperature based on the altitude of the agricultural field. Due to the usual cultivation of coffee in hills and mountain regions, the fertilizer demand may be conveniently adjusted on the altitude of the agricultural field and the weather data. In this case, local weather data can be precisely refined due to the variations of temperature with the altitude.

In a further embodiment, the method further comprises receiving the number of productive stems of the plants present in the plantation in the agricultural field and the vegetative demand is further adjusted based on the number of productive stems.

In a further embodiment, the basic demand is adjusted by means of a nutrient specific efficiency factor, wherein determining an efficiency factor may further comprise receiving at least one of fertilizer product data, or weather data or soil data from the agricultural field and the efficiency factor is determined based on the at least one of the fertilizer product data, weather or soil data.

Fertilizer efficiency is determined by several factors: based on the fertilizer product data, volatility of the compounds forming the fertilizer can be taken into account. Further influencing factors like soil moisture and weather data can be included in the determination by themselves or in combination with the product data. For example, precipitation influences the amount of leeching which nitrogen in the soil may be subjected to. It is specially to be remarked that leeching is a nitrogen specific chemical process and therefore only related to the nitrogen efficiency factor. Moreover, leeching may occur at different rates depending on the soil type and texture. For example, sandy soils have less water retention and increase leeching. Hence, the efficiency factor may be further adjusted based on soil data.

In a further embodiment, the method further comprises determining a shadow condition and the basic demand is further adjusted based on the shadow condition as it will be made clear below.

In a further embodiment, the method further comprises receiving soil data and the total nutrient demand is further adjusted based on a soil nutrient availability factor. Due to past farming management practices and the nature of the soils, a high variability in the availability of already existing nutrients is present. Farmers may have at their availability data from previous soil laboratory analysis or data from dedicated soil sensors as well as from field data already stored. Based on the nutrient availability data, a soil nutrient availability factor is determined which takes into consideration said variability.

As such, a mathematical expression comprising all described embodiments of the current disclosure for a coffee plantation in productive crop stage may be represented as follows:

$$F_T = \frac{C_{Shade} * C_{Soil}}{C_{EF}} * [F_{BASIC}];$$

wherein $F_{BASIC}$ is determined according to the crop growth stage data. When the crop is in a vegetative crop stage, $F_{BASIC} = F_{VEG}$, whereas when the crop is in a productive stage, the basic demand is defined as $F_{BASIC} = F_{VEG} + F_{PROD}$, and whereby the vegetative and productive demand are defined as follows.

$$F_{VEG} = C_{VEG} * D * C_T * n$$

$$F_{PROD} = C_{PROD} * Y$$

wherein:

- $F_T$, $F_{VEG}$, $F_{PROD}$ are the demand of nutrients (kg/ha),;
- $C_{Shade}$ is a shadow dependent coefficient;
- $C_{EF}$ is a nutrient specific efficiency factor;
- $C_{VEG}$ is the nutrient specific vegetative demand factor (kg/plant/year);
- $D$ is the density of plants in the farm (plants/ha);
- $C_T$ is a temperature dependent coefficient adjusting the vegetative potential growing rate;
- $n$ is the number of productive stems present per plant in the plantation;
- $C_{PROD}$ is the nutrient specific productive demand factor, based on specific variety and/or species data;
- $Y$ is an expected yield value for the current season (kg/ha);
- $C_{Soil}$ is a nutrient specific correction factor based on the in-soil availability of nutrients;

The above displayed equation may be expressed in a scalar way for each independent nutrient or matrix-wise by a vector comprising the at least one of the different nutrients of importance in the fertilization of coffee. For example, in a non-limiting example, the nutrient specific factors and demands may comprise rows for at least one of the following nutrients: N, P, K, Ca, Mg, S, Fe, Mn, B, Zn, Cu or equivalent components acting as carriers of the nutrients like $P_2O_5$, $K_2O$, CaO, MgO.

$C_{Shade}$ represents a shadow dependent factor which may be added to take into consideration the effect of the sun conditions on the crop, wherein the factor takes the value 0 when the shadow coverage of the crop is >60%, is 1 if the shadow coverage is <20% and takes values in between. In a further embodiment the shadow dependent factor may be preferably determined between said 20% and 60% by means of an equation with a negative quadratic term and a positive linear term based on the percentage of shadow interpolating the boundary values of 0 and 1 at 20 and 60%.

$F_{VEG}$ and $F_{PROD}$ are plant species dependent nutrient specific coefficients which account for the vegetative and productive demand, which may be defined as follows for the vegetative demand (kilograms of nutrient / plant / year):

| Nutrient | Demand Factor kg/plant/year Robusta |
|---|---|
| N | 0,01 |
| P | 0,0027 |
| K | 0,018 |
| Ca | 0,01 |
| Mg | 0,0018 |
| S | 0,00018 |
| Fe | 0,00001 |
| Mn | 0,00036 |
| B | 0,0000018 |
| Zn | 5,4E-06 |
| Cu | 7,2E-06 |

and correspondingly for the productive demand.

$C_{EF}$ is a nutrient specific efficiency factor which may be added to take into consideration the absorption efficiency of each of the nutrients (N, P, K, Ca, Mg, S, Fe, Mn, B, Zn, Cu) or equivalent components present in the fertilizer based on at least one of the fertilizer product data, soil data and/or weather data. For example, based on known product data the absorption efficiency for Nitrogen may be solely adjusted based on the product type (e.g. based on active component, like urea or product identification information, or coating type) or advantageously combined with weather data (e.g. Nitrogen is very susceptible to leaching and therefore precipitation data of importance for determining the absorption efficiency). Hence, following the above representation, the nutrient specific efficiency factor may be represented as follows for a given product and weather and soil conditions, wherein the nutrient specific efficiency factors are comprised between 0 and 1.

| Nutrient | Efficiency factor |
|---|---|
| N | 0,75 |
| P | 0,3 |
| K | 0,75 |
| Ca | 0,6 |
| Mg | 0,75 |
| s | 0,9 |
| Fe | 0,9 |
| Mn | 0,6 |
| B | 0,6 |

(continued)

| Nutrient | Efficiency factor |
|----------|-------------------|
| Zn | 0,9 |
| Cu | 0,9 |

$C_{Soil}$ is a nutrient specific correction factor based on the in-soil availability of the nutrient which may be added, wherein the soil data from soil analysis may be inputted by the farmers or provided by soil sensors or suitable field data, as mentioned above. Based on the respective availability of each specific nutrient, a correction factor for each nutrient can be generated, wherein the factor may be comprised, in particular, between 0.3 and 1.15. The factor may be correspondingly and individually adjusted based on the respective nutrient availability and is configured to take the presence of specific nutrients in the soil into consideration.

$C_T$ is a temperature dependent coefficient which might be added to determine the vegetative potential growing rate, wherein the coefficient may be in particular limited to the range comprised between 0.0952 and 2,3 for the temperature ranges between 14 and 30°C and may be adjusted for different species.

$D, Y, n$ are further numbers which may be added to adapt the fertilization based on the plant density, planned or expected yield and number of productive stems. Coffee plants are usually actively pruned during growth and over years for rejuvenating by farmers, since old productive stems decay in production. As such, the farmers are aware of the average productive stems present in their farm and can be designated as a differentiating factor. Moreover, density data of the plantation is known by the farmers at planting time. Some of these factors can be automatically determined based on image data and/or remote imagery data. For example, based on the known location of the agricultural field, remote imagery data can be analyzed to determine the plant density within the agricultural field. Further, an image of the plants may be processed to determine the number of productive stems per plant.

$F_{BASIC}$ is the basic nutrient specific demand for a crop in productive crop stage, which is the sum of the vegetative and productive nutrient demand may take into account at least one of the influence of temperature, expected/planned yield, plant density in the agricultural field and number of productive stems.

Once the total fertilizer demand has been determined, the method of the current disclosure may be configured in a further embodiment to determine the desired number of applications and the application date. Usually, depending on the crop growth stage and other determining factors like average air temperature and plant species, the number of applications may vary between 1 and 4. For example, in the southern regions of Colombia, crop cycles are between September and June of the following year, whereas in Mexico, usual crop cycles happen between April and February of the following year. The method of the current disclosure may be further configured to determine the number of applications based on farmer's input and according to crop phases split the total fertilizer demand amongst the different determined dates of fertilizer application.

According to the present disclosure, a device configured to carry out the method of the current application is envisaged. In the following passages, different embodiments of electronic devices, user interfaces for such devices and associated processes for using such devices are described. In some embodiments, the device is a portable communications device such as a mobile telephone, that also contains other functions, allowing the user to carry out the method of the current disclosure on site. It should also be understood that, in some embodiments, the device is not a portable communications device, but may as well be a desktop or a laptop computer.

In an embodiment, the electronic device may be a mobile or desktop device with a dedicated Graphical User Interface (GUI) to support and guide the user in the determination of the to be introduced factors for the fertilizer recommendation. In this embodiment, the electronic device may comprise input (e.g. a keyboard) and output (e.g. a display) means as generally known, which might as well be combined in the form of a touch sensitive touchscreen and the keyboard take the form of a virtual keyboard. However, other input means like a mouse are not excluded from the current disclosure.

The Graphical User Interface may be configured to display and receive user input of the different types of data and determine further inputs like the stage of the crop, vegetative or productive phase, the desired number of applications, expected yield data or other yield related data from previous crops and further cues which improve the fertilizer recommendation as explained above.

As a start the user may be allowed to determine an agricultural field containing the coffee plantation from a plurality of his managed fields. This can be achieved by means of user input on a map interface or based on the device location, wherein the device may further determine the extent of the agricultural field based on remote imagery data by means of boundary detection algorithms. The device may be further configured to receive user input comprising field data from the agricultural field.

The device may be configured in further steps to receive the input regarding the crop development stage, the coffee species and variety of the plants present in the agricultural field or to receive it automatically from field data stored previously in the device.

The device may be further configured in a further step to determine the number of fertilizer applications. Based on the crop stage, crop location and other determining factors, it is a usual approach to space in time the fertilizer amount over several application.

In a further embodiment, the device may be configured to receive the expected or past yield data. The device may be configured to provide a range of allowable yield data based on the field data (e.g. the size of the farm) to guide the farmers and provide feedback of low, average and high yield potentials for the determined agricultural field. This is of further help for the farmers to evaluate the productivity of their plantation as well as providing boundaries to the values, improving the robustness of the introduced data.

In a further embodiment, the device may be configured to receive the number of productive stems present in the coffee plants of the agricultural field. Usually, the farmer decides how many productive stems the plants should have by means of appropriate pruning. The farmer may then input a fixed number of productive stems per plant for the whole agricultural field, or for different sub-areas of the agricultural field.

In a further embodiment, receiving the number of productive stems can further comprise obtaining the data from image data of a plant acquired by the farmers at the agricultural field. In this embodiment, the device may be further configured to process the image data and obtain automatically the number of productive stems of the pictured plant by means of image processing and determine the appropriate number of productive stems.

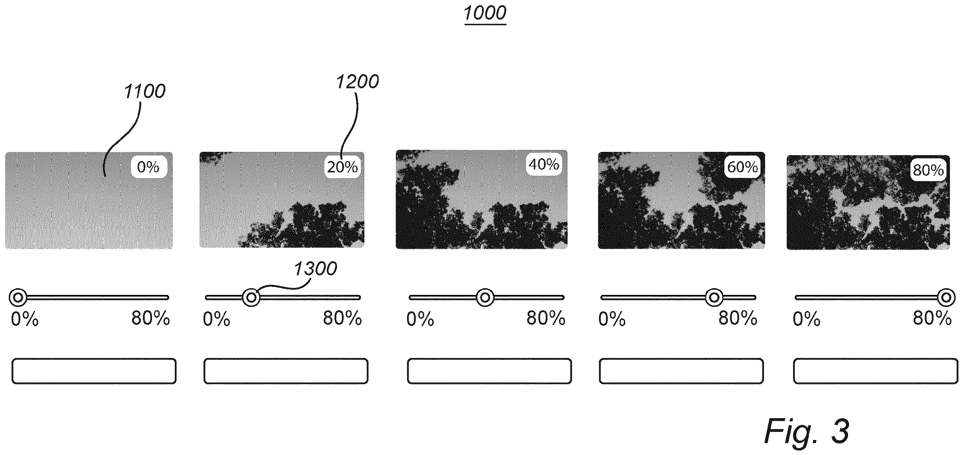

Figure 3 shows an example of a dedicated Graphical User Interface 1000, wherein at least one image 1100 is displayed with a displayed associated shadow condition factor 1200. The images to be displayed may be configured to represent standard canopy types present in the region of the agricultural field or can be configured to receive data regarding the canopy type from user input. In an embodiment, the farmer can introduce canopy type data, which is then used by the electronic device to generate the image data to be displayed. Figure 3 shows a scenario which adapts as a function of the slider.

In a further embodiment, the electronic device is configured to determine the shadow condition based on user input. In this embodiment, the electronic device may display a plurality of images displaying different tree canopy forms with an associated shadow condition. In a further embodiment, the electronic device may be configured to display the at least one image of a tree canopy, such that a shadow condition (e.g. approx. 40%, 50% or the like) is associated with the at least one image of a tree canopy. The electronic device may further be configured to display a plurality of images of a tree canopy or a combination thereof. The user may then, based on at least one of the displayed images, determine a shadow condition. As such, the user is guided towards a meaningful input and is able of determining an appropriate shadow condition.

In a further embodiment, displaying at least one image of a tree canopy and determining the shadow condition based on a user input further comprises displaying a sliding bar 1300, wherein the sliding bar 1300 comprises a predetermined range and a cursor which can be freely moved along the sliding bar 1300. The user, upon providing an input on the sliding bar 1300 is then able of displacing the cursor along the sliding bar. In this embodiment, the device may be further configured to display one of the plurality of images based on the position of the cursor on the slider. Following this embodiment, the user is provided with a continuously guided interaction which improves the shadow condition determination. Based on the gradual change of the displayed image, the user is in a better place to judge and determine the image which best displays the shadow condition of the agricultural field, as it can be seen in Figure 3.

In a further embodiment, the electronic device may be further configured to receive image data from a picture taken by the farmers of the surrounding vegetation to determine the canopy type and/or the shadow condition.

In a further embodiment, the electronic device 100 may be further configured to receive position information together with the image data. By means of the determined position and orientation, the taken image can serve for a more precise determination of the shadow condition. Having determined position, based on the sun and earth relative position for the different seasons a shadow condition can be determined based on remote data, wherein the average shadow condition of the field over the different seasons can be determined.

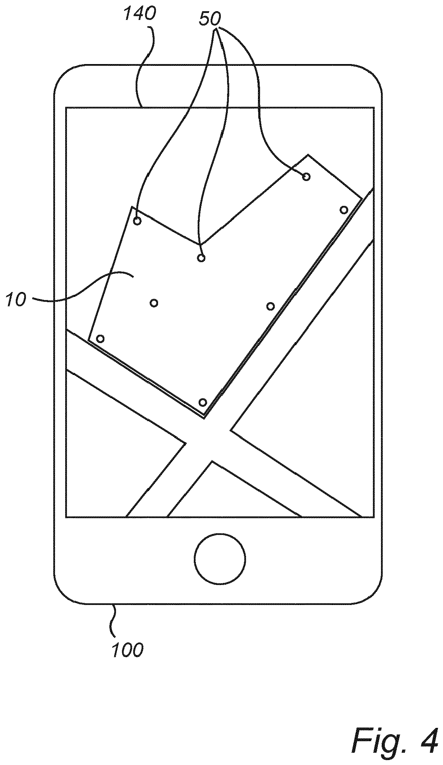

In a further embodiment, the electronic device 100 may guide the farmers through different positions in the agricultural field in order to determine the shadow condition at different representative locations of the agricultural field. In this embodiment, the device may be further configured to determine at least one position 50 within the agricultural field 10 or in the vicinities and configured to display the at least one position by means of the display unit 140 by means of appropriate maps or navigation menus, as it can be seen in Figure 4. As such, the farmers may receive at least one position within or nearby the agricultural field where the shadow condition may be determined. Based on the shadow condition at the at least one position, a more complete shadow condition of the whole agricultural field may be achieved.

In a further embodiment, the at least one position determined by the device to provide a reliable shadow determination may be determined based on the shape and/or orientation of the agricultural field. Based on the location of the field, sun position at any given moment throughout the year can be determined. Hence, the shadow determination process may be improved by guiding the user as to the positions within the agricultural field which are convenient for the determination. The device may be further configured to determine an orientation or direction in which the shadow determination should be carried out.

In a further embodiment, the at least one position is further determined based on the relative position and orientation of the agricultural field. Through a suitable selection of relevant positions based on the relative position and orientation of the agricultural field, the number of positions where the sampling positions may be reduced, improving the amount of time needed for a full assessment of the field.

In a further embodiment, the electronic device may be further configured to receive the average air temperature information for the agricultural field as it is described in the following embodiments. In an embodiment, the electronic device may be further configured to receive elevation information (meters above sea level). In a further embodiment, the electronic device is configured to determine the location of the user by means of a GPS unit and based on the location of the user determine the altitude, which can be derived using satellite triangulation from a plurality of satellites, or by deriving the ground elevation from a global elevation map based on the location, and/or a pressure sensor. In a further embodiment, the electronic device may be further configured to receive weather data from the determined location. Based on the given weather data, the average air temperature can be adjusted based on the elevation information.

However, it should be understood that the device may receive the above-mentioned data by means of a communication unit, accessing farm and field data from a central repository which might have been built based on previous user inputted data or other existing databases.

In a further embodiment, the electronic device may be configured to wirelessly (or not) communicate with a crop nutrient measurement device like the N-Tester, providing calibration data for the fertilizer recommendation. Said crop nutrient measurement devices may provide a nutrient status from one or a plurality of plants, relating the nutrient status to chlorophyll levels or other indicators. As such, the fertilizer recommendation method may be further configured to adjust the recommendation based on a crop nutrient measurement reading.

While the present disclosure has been illustrated by a description of various embodiments and while these embodiments have been described in considerable detail, it is not the intention of the applicant to restrict or in any way limit the scope of the appended claims to such detail. Additional advantages and modifications will readily appear to those skilled in the art. The disclosure is not limited to the described embodiments, versions or examples, which are included to enable a person having ordinary skill in the art to make and use the disclosure when combined with information and knowledge available to the person having ordinary skill in the art.

Accordingly, the detailed description thereof should not be construed as restrictive in all aspects but considered as illustrative. The scope of the disclosure should be determined by reasonable interpretation of the appended claims and all changes that come within the equivalent scope are included in the scope of the current disclosure.

The process steps, method steps, algorithms or the like may be described in a sequential order, such processes, methods and algorithms may be configured to work in alternate orders. In other words, any sequence or order of steps that may be described does not necessarily indicate a requirement that the steps be performed in that order. The steps of processes described herein may be performed in any order practical. Further, some steps may be performed simultaneously, in parallel, or concurrently. Various methods described herein may be practiced by combining one or more machine-readable storage media containing the code according to the present disclosure with appropriate standard computer hardware to execute the code contained therein. An apparatus for practicing various embodiments of the present disclosure may involve one or more computers (or one or more processors within a single computer) and storage systems containing or having network access to computer program(s) coded in accordance with various methods described herein, and the method steps of the disclosure could be accomplished by modules, routines, subroutines, or subparts of a computer program product.

While the use of plural nouns has been preferred throughout the disclosure when referring to persons (the users, the farmers) in order to allow a gender-neutral drafting of the text, there is hereby no limitation intended as to the number of persons which the current disclosure should be considered related to. This has been carried out in light of the amendments to the guidelines entered in force on 1st of March 2021 supporting gender-neutrality and as an example for others.

## Claims

1. A computer implemented method for determining a fertilizer recommendation for coffee plants, wherein the method comprises the steps of:

   i. determining an agricultural field wherein at least one coffee plantation is comprised, receiving plant density data of the at least one coffee plantation,

   receiving plant species data and crop growth stage data of the at least one coffee plantation, wherein the crop growth stage data defines a vegetative crop stage or a productive crop stage; wherein the method further comprises determining a basic demand and the basic demand is based on a vegetative demand if the crop is in a vegetative crop stage and the basic demand is based on the sum of a vegetative demand and a productive demand if the plantation is on a productive crop stage,

wherein the vegetative demand is based on the plant density data and a nutrient specific vegetative demand factor based on the plant species data.

2. A method according to claim 1, wherein determining the productive demand comprises, receiving yield data and determining a productive demand based on the yield data and a nutrient specific productive demand factor based on the plant species data.

3. A method according to claim 1 or 2, wherein the method further comprises adjusting the vegetative demand by a temperature coefficient, wherein determining the temperature coefficient comprises receiving altitude data and/or an average air temperature of the agricultural field and the temperature coefficient is determined based on the average air temperature and/or the altitude data.

4. A method according to any one of the preceding claims, wherein the method further comprises receiving the number of productive stems of the plants present in the plantation, and wherein the vegetative demand is further adjusted based on the number of productive stems.

5. A method according to any one of the preceding claims, wherein the basic demand is adjusted by means of a nutrient specific efficiency factor, wherein determining a nutrient specific efficiency factor comprises receiving at least one of a fertilizer product data, or weather data, and soil data of the agricultural field, and the efficiency factor is determined based on the at least one of the fertilizer product data, the weather data, or the soil data.

6. A method according to any one of the preceding claims, wherein the method further comprises determining a shadow condition of the agricultural field, and wherein the basic demand is adjusted based on the shadow condition.

7. A method according to claim 6, wherein determining a shadow condition of the agricultural field further comprises determining at least one position for the shadow determination to be carried out.

8. A method according to any one of the preceding claims, wherein the method further comprises receiving soil data of the agricultural field, and wherein the total nutrient demand is adjusted based on a soil nutrient availability factor.

9. A device for determining a fertilizer demand for coffee plants, configured to carry out the method according to any one of the claims 1 to 8.

10. A device according to claim 9, configured to carry out the method according to claim 7, wherein the device comprises input and output means and a dedicated Graphical User Interface, wherein the shadow condition is determined according to a gradually adjustable image showing different pre-defined shadow condition images based on the user input.

11. A device according to claim 9 or 10, wherein the device comprises a localization unit to determine positional data of the device, and the elevation of the agricultural field is determined based on the positional data of the device.

12. A device according to claim 11, wherein the device is further configured to receive weather data and based on the positional data and the elevation determine an average air temperature of the agricultural field.

13. A data processing apparatus comprising means for carrying out the method of any one of the claims 1 to 8.

14. A computer-readable storage medium comprising instructions which, when executed by a computer system, cause the computer to carry out the method of any one of the claims 1 to 8.

15. A computer program product comprising instructions which, when the program is executed by a computer system, cause the computer to carry out the method of any one of the claims 1 to 8.

Fig. 1

*Fig. 2*

Fig. 3

EP 4 179 861 A1

EP 4 179 861 A1

Fig. 4

15

*Fig. 5*

Europäisches
Patentamt

European
Patent Office

Office européen
des brevets

**EUROPEAN SEARCH REPORT**

Application Number

**EP 21 20 8031**

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 9 652 840 B1 (SHRIVER JOHN [US] ET AL) 16 May 2017 (2017-05-16) | 1-5,8,9, 11-15 | INV. A01C21/00 |
| A | * abstract * * column 5, line 24 - line 67 * * column 6, line 1 - line 46 * * column 9, line 43 - line 60 * * column 12, line 10 - line 27 * * column 14, line 58 - line 67 * * column 15, line 1 - line 55 * * column 25, line 51 - line 64 * * claims; figures * | 6,7,10 | |
| A | WO 2017/147682 A1 (CROP PRODUCTION SERVICES INC [CA]) 8 September 2017 (2017-09-08) * abstract * * page 1, paragraphs 1,4,5 * * page 2, paragraphs 7,8 * * page 5, paragraphs 31,32 * * claims; figures * | 1-15 | |
| A | US 3 990 181 A (DO VALLE FERNANDO RIBETRO) 9 November 1976 (1976-11-09) * abstract * * column 4, line 41 - line 68 * * column 5, line 1 - line 3 * * claims; figures * | 1,13-15 | TECHNICAL FIELDS SEARCHED (IPC) A01C |
| A | GB 1 535 854 A (BARNES D; ANDERSONS PLANTATION PTY ET AL.) 13 December 1978 (1978-12-13) * the whole document * | 1 | |

The present search report has been drawn up for all claims

| Place of search | Date of completion of the search | Examiner |
|---|---|---|
| The Hague | 26 April 2022 | Oltra García, R |

EPO FORM 1503 03.82 (P04C01)

## EP 4 179 861 A1

### ANNEX TO THE EUROPEAN SEARCH REPORT
### ON EUROPEAN PATENT APPLICATION NO.

EP 21 20 8031

This annex lists the patent family members relating to the patent documents cited in the above-mentioned European search report.
The members are as contained in the European Patent Office EDP file on
The European Patent Office is in no way liable for these particulars which are merely given for the purpose of information.

26-04-2022

| Patent document cited in search report | | Publication date | Patent family member(s) | | Publication date |
|---|---|---|---|---|---|
| US 9652840 | B1 | 16-05-2017 | US 9652840 B1 | | 16-05-2017 |
| | | | US 2017213083 A1 | | 27-07-2017 |
| | | | US 2018322344 A1 | | 08-11-2018 |
| | | | US 2019034726 A1 | | 31-01-2019 |
| WO 2017147682 | A1 | 08-09-2017 | CA 3016216 A1 | | 08-09-2017 |
| | | | US 2019059203 A1 | | 28-02-2019 |
| | | | WO 2017147682 A1 | | 08-09-2017 |
| US 3990181 | A | 09-11-1976 | NONE | | |
| GB 1535854 | A | 13-12-1978 | AU 497144 B2 | | 30-11-1978 |
| | | | GB 1535854 A | | 13-12-1978 |
| | | | KE 3122 A | | 15-05-1981 |
| | | | MY 8100326 A | | 31-12-1981 |
| | | | NZ 180258 A | | 19-10-1981 |
| | | | ZA 761330 B | | 27-04-1977 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- BR 102019002078 A2